# EUROPEAN PATENT APPLICATION

(11) **EP 3 421 906 A1**
(43) Date of publication of application: **02.01.2019**
(21) Application number: 18180260.4
(22) Date of filing: 28.06.2018
(51) Int. Cl.: F25B 41/06, F25B 49/02, F16K 27/02

(54) **EXPANSION VALVE**

(30) Priority: 29.06.2017 JP 2017127086
(71) Applicant: Fujikoki Corporation, Tokyo 158-0082 (JP)
(72) Inventor: YAMAZAKI, Shogo, Setagaya-ku, Tokyo 158-0082 (JP); YOKOTA, Hiroshi, Setagaya-ku, Tokyo 158-0082 (JP); TOMIZAWA, Naoki, Setagaya-ku, Tokyo 158-0082 (JP)
(74) Representative: Schweiger, Martin

(57) **Abstract**

The invention provides an expansion valve which can suppress production of an abnormal noise from an expansion valve in a case where an opening degree of the expansion valve is very small. The expansion valve is provided with a valve main body which has a valve chamber, a valve body which is arranged within the valve chamber, a valve body support member which supports the valve body, an urging member which urges the valve body toward a valve seat, an actuating bar which presses the valve body in an opening direction of the valve, a vibration proof spring which suppresses a vibration of the valve body or the actuating bar, and a contact surface with which the vibration proof spring slidingly contacts.

## Description

### BACKGROUND OF THE INVENTION

### 1. Field of the Invention

The present invention relates to an expansion valve, and more particularly to an expansion valve with a vibration proofing spring. The present invention further relates to a refrigerant circulation system using the expansion valve.

### 2. Description of Related Art

There has been known a phenomenon that a valve body and an actuating bar pressing the valve body vibrate due to a differential pressure between a pressure on the upstream side of the valve body and a pressure on the downstream side of the valve body in the expansion valve, and an abnormal noise is produced. In order to suppress the vibration, a vibration proof spring has been sometimes arranged within a valve main body of the expansion valve.

As a relevant technique, a thermostatic expansion valve is disclosed in Japanese Patent No. 6053543 (hereinafter, "patent literature 1"). The thermostatic expansion valve disclosed in the patent literature 1 is provided with a vibration proof member which is fit into an outer periphery of the actuating bar and prevents a vibration of the actuating bar. The vibration proof member has an annular portion which is formed by elastically deforming an elongated plate-like elastic material into an annular shape, and three vibration proof springs which are formed by making a cut in a part of the elastic material and inwardly folding the part. Further, the vibration proof springs are respectively arranged at positions at which a circumference is equally divided into three parts, and spring force of one vibration proof spring among them is set to be greater than those of the other vibration proof springs.

Further, Japanese Unexamined Laid-Open Patent Publication No. 2005-156046 (herein after "patent literature 2) discloses an expansion valve. In the expansion valve disclosed in the patent literature 2, a vibration proof spring is arranged between a support member supporting a valve body and a coil spring.

In the thermostatic expansion valve disclosed in the patent literature 1 and the expansion valve disclosed in the patent literature 2, the spring force of the vibration proof spring is fixed regardless of how much an opening degree of the expansion valve is. In the meantime, the differential pressure between the pressure on the upstream side of the valve body and the pressure on the downstream side of the valve body in the expansion valve tends to become greater in a case where the opening degree of the expansion valve is very small, and to increase fluid force applied to the valve. As a result, in a case where the opening degree of the expansion valve is very small, the valve body and the actuating bar is likely to vibrate, and to produce an abnormal noise.

### SUMMARY

Accordingly, an object of the present invention is to provide an improved expansion valve. Another object of the present invention is to provide an expansion valve that can suppress production of the abnormal noise from an expansion valve, especially in a case where an opening degree of the expansion valve is very small.

In order to achieve at least one of the above objects and/or other objects, an expansion valve according to one exemplary embodiment reflecting one aspect of the present invention includes a valve main body provided with a valve chamber therein, a valve body arranged within the valve chamber, a valve body support member supporting the valve body, an urging member urging the valve body toward a valve seat, an actuating bar being in contact with the valve body and pressing the valve body in an opening direction of the valve against urging force generated by the urging member, a vibration proof spring suppressing a vibration of the valve body and/or the actuating bar, and a contact surface with which the vibration proof spring slidably contacts. The contact surface has a shape by which the amount of deformation of the vibration proof spring becomes greater as the valve body goes towards a closing direction of the valve.

In the above expansion valve, the vibration proof spring prefarably includes a legged spring. Further, the legged spring is preferably provided with a base portion, and a plurality of leg portions downwardly extending from the base portion.

In the above expansion valve, it is preferable that the vibration proof spring further includes a ring spring. Furthermore, the ring spring is preferably provided with a ring portion, and an elastic protruding portion inwardly protruding from the ring portion and contacting with an outer peripheral surface of the actuating bar.

In the above expansion valve, the vibration proof spring is preferably arranged within the valve chamber. Further, the contact surface is preferably an inner wall surface defining the valve chamber.

In the above expansion valve, the contact surface preferably has a deformation amount adjustment surface to which a distance from a center axis of the actuating bar becomes shorter as the surface goes towards the valve closing direction. Moreover, it is preferable that the expansion valve is further provided with a power element connected to the actuating bar via a diaphragm support member.

According to the present invention, the invention allows the expansion valve to be provided, which can suppress production of an abnormal noise from the expansion valve in a case where an opening degree of the expansion valve is very small.

Additional or separate features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

### BRIEF DESCRIPTION OF DRAWINGS

[Fig. 1] Fig. 1 is a view schematically showing an overall structure of an expansion valve according to a first embodiment.
[Fig. 2] Fig. 2 is a schematic perspective view schematically showing an example of a vibration proof spring.
[Fig. 3] Fig. 3 is a view schematically showing a state of the vibration proof spring in a case where an opening degree of the expansion valve is very small.
[Fig. 4] Fig. 4 is a view schematically showing a state of the vibration proof spring in a case where the opening degree of the expansion valve is comparatively large.
[Fig. 5] Fig. 5 is a view schematically showing an overall structure of an expansion valve according to a second embodiment.
[Fig. 6] Fig. 6 is a schematic perspective view schematically showing an example of a vibration proof spring.
[Fig. 7] Fig. 7 is a view schematically showing a state of the vibration proof spring in a case where an opening degree of the expansion valve is very small.
[Fig. 8] Fig. 8 is a view schematically showing a state of the vibration proof spring in a case where the opening degree of the expansion valve is comparatively large.
[Fig. 9] Fig. 9 is a view schematically showing an overall structure of an expansion valve according to a third embodiment.
[Fig. 10] Fig. 10 is a schematic cross sectional view schematically showing an example in which the expansion valve according to the embodiment is applied to a refrigerant circulation system.

### DESCRIPTION OF PREFEERD EMBODIMENT

A description will be given below of an expansion valve 1 according to an embodiment with reference to the accompanying drawings. In the following description of the embodiment, the same reference numerals will be given to portions and members having the same function, and a redundant description of the portions and the members having the same reference numerals will not be repeated.

### (Definition of direction)

In the present specification, a direction heading from a valve body 3 toward an actuating bar 6 is defined as an "upward direction", and a direction heading from the actuating bar 6 toward the valve body 3 is defined as a "downward direction". Therefore, the direction from the valve body 3 toward the actuating bar 6 is called as an "upward direction" in the present specification, regardless of whatever posture an expansion valve 1 takes.

### (First embodiment)

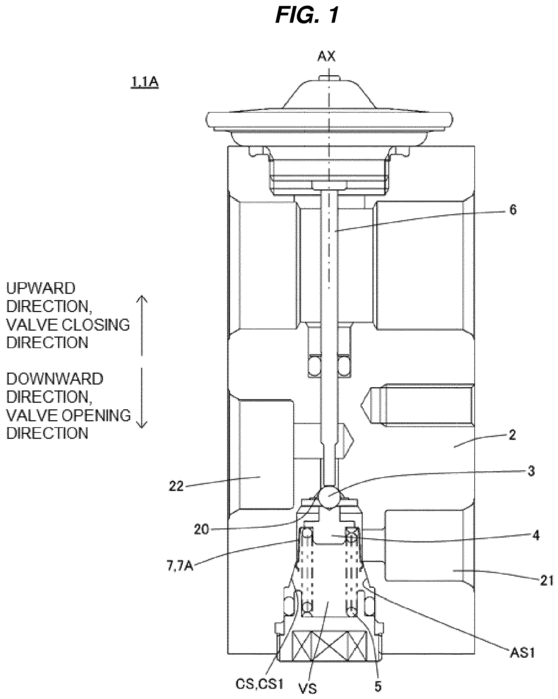

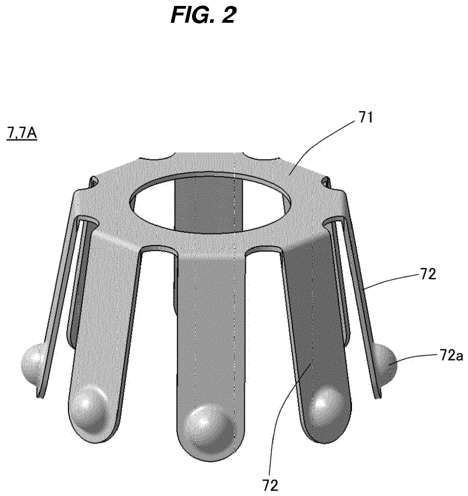

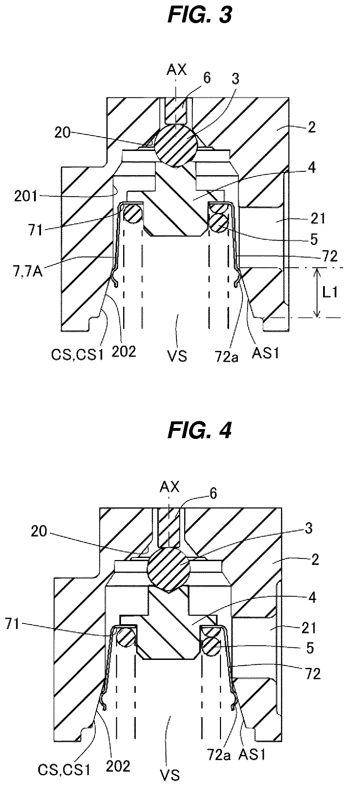

A description will be given of an expansion valve 1A according to a first embodiment with reference to Figs. 1 to 4. Fig. 1 is a view schematically showing an overall structure of the expansion valve 1A according to the first embodiment. Fig. 2 is a schematic perspective view schematically showing an example of a vibration proof spring 7. Fig. 3 is a view schematically showing a state of the vibration proof spring 7 in a case where an opening degree of the expansion valve 1A is very small. Fig. 4 is a view schematically showing a state of the vibration proof spring 7 in a case where the opening degree of the expansion valve 1A is comparatively large.

The expansion valve 1A is provided with a valve main body 2 which includes a valve chamber VS, a valve body 3, a valve body support member 4, an urging member 5, an actuating bar 6, a vibration proof spring 7, and a contact surface CS with which the vibration proof spring 7 slidably contacts.

The valve main body 2 is provided with a first flow path 21 and a second flow path 22 in addition to the valve chamber VS. The first flow path 21 is, for example, a supply side flow path, and a fluid is supplied to the valve chamber VS via the supply side flow path. The second flow path 22 is, for example, a discharge side flow path, and the fluid within the valve chamber VS is discharged from the expansion valve via the discharge side flow path.

The valve body 3 is arranged within the valve chamber VS. In a case where the valve body 3 is seated on a valve seat 20 of the valve main body 2, the first flow path 21 and the second flow path 22 are in a non-communicating state. On the other hand, in a case where the valve body 3 is separated from the valve seat 20, the first flow path 21 and the second flow path 22 are in a communicating state.

The valve body support member 4 supports the valve body 3. In an example shown in Fig. 1, the valve body support member 4 supports the valve body 3 from the lower side.

The urging member 5 urges the valve body 3 toward the valve seat 20. The urging member 5 is, for example, a coil spring. In the example shown in Fig. 1, the urging member 5 upwardly urges the valve body 3 via the valve body support member 4.

The lower end of the actuating bar 6 is in contact with the valve body 3. Further, the actuating bar 6 presses the valve body 3 in an opening direction of the valve (that is, a downward direction) against urging force generated by the urging member 5. In a case where the actuating bar 6 moves in the downward direction, the valve body 3 separates from the valve seat 20 and the expansion valve 1A enters an open state.

The vibration proof spring 7 is a vibration proof member which suppresses a vibration of the valve body 3 and the actuating bar 6 (particularly, the valve body 3). In the example shown in Fig. 1, the vibration proof spring 7 is arranged within the valve chamber VS.

The contact surface CS is a surface with which the vibration proof spring 7 slidably contacts. In other words, the contact surface CS can relatively move with respect to the vibration proof spring 7, and the contact surface CS is in contact with the vibration proof spring 7.

In the first embodiment, the amount of deformation of the vibration proof spring 7 increases as the valve body 3 goes towards a closing direction of the valve (that is, an upward direction). In other words, in the first embodiment, the amount of deformation of the vibration proof spring 7 when the opening degree of the expansion valve 1A is very small is greater than the amount of deformation of the vibration proof spring 7 when the opening degree of the expansion valve 1A is large. Further, since the amount of deformation of the vibration proof spring 7 when the opening degree of the expansion valve 1A is very small is large, vibration proof performance is high in a case where the opening degree of the expansion valve 1A is very small. Further, since the amount of deformation of the vibration proof spring 7 when the opening degree of the expansion valve 1A is large is relatively small, the expansion valve 1 suppresses an increase in a sliding resistance between the vibration proof spring 7 and the contact surface CS.

As mentioned above, in the expansion valve 1A according to the first embodiment, the vibration proof performance of the expansion valve 1A is improved while suppressing the increase in the sliding resistance between the vibration proof spring 7 and the contact surface CS. In other words, during steady operation (when the valve opening degree is relatively large), the increase in the sliding resistance is suppressed, which does not impair controllability of the expansion valve 1A as a consequence. On the other hand, when the opening degree is very small where an abnormal noise tends to be produced, the amount of deformation of the vibration proof spring 7 is increased, thereby more effectively suppressing the vibration of the valve body 3 and/or the actuating bar 6. As a result, the production of the abnormal noise from the expansion valve 1A can be suppressed.

In the first embodiment, the vibration proof spring 7 is arranged within the valve chamber VS. In this case, it is preferable that the contact surface CS with which the vibration proof spring 7 slidably contacts is constructed by an inner wall surface CS1 which defines the valve chamber VS.

In the example shown in Fig. 1, the vibration proof spring 7 is arranged between the inner wall surface CS1 and the valve body support member 4. In the example shown in Fig. 1, the valve body 3 and the valve body support member 4 are a separate body, or alternatively, the valve body 3 and the valve body support member 4 may be formed as an integrally formed member.

In the example shown in Fig. 1, the contact surface CS (the inner wall surface CS1) is a deformation amount adjustment surface AS1 on which a distance from a center axis AX of the actuating bar 6 becomes shorter as the surface CS goes towards a closing direction of the valve, that is, an upward direction. More specifically, the contact surface CS (the inner wall surface CS1) is a tapered surface on which the distance from the center axis AX of the actuating bar 6 becomes shorter as the surface CS goes towards the closing direction of the valve, that is, the upward direction.

### (Vibration proof spring 7)

A description will be given of an example of the vibration proof spring 7 according to the first embodiment with reference to Fig. 2. In the example shown in Fig. 2, the vibration proof spring 7 is a legged spring 7A which is provided with a plurality of leg portions 72. In the example shown in Fig. 2, while the number of the leg portions 72 is eight, instead thereof, the number of the leg portions 72 may be equal to or more than three.

The legged spring 7A is provided with a base portion 71, and a plurality of leg portions 72 which downwardly extend from the base portion 71. The leg portions 72 are arranged at even intervals along an outer edge of the base portion 71. In the example shown in Fig. 2, each of the leg portions 72 is provided with an end side protruding portion 72a which upwardly protrudes at the end thereof. Further, as shown in Fig. 3, the end side protruding portion 72a comes into contact with the above deformation amount adjustment surface AS1. Additionally, the end side protruding portion 72a may have a partly spherical shell shape. The partly spherical shell shape means a shape which coincides or substantially coincides with a part of the spherical shell. In a case where the end side protruding portion 72a has the partly spherical shell shape, a portion coming into contact with the deformation amount adjustment surface AS1 forms a smooth curved surface portion. As a result, the deformation amount adjustment surface AS1 is resistant to scratch. Further, since the partly spherical shell shape is a structurally high-strength shape, the shape of the end side protruding portion 72a is less likely to be deformed for a long time.

In a case where the legged spring 7A is made of metal, the end side protruding portion 72a can be formed by plastically deforming a part of the leg portion 72 by press working. In other words, the end side protruding portion 72a may be a plastic deformation portion.

In the example shown in Fig. 2, the base portion 71 has a ring shape, and a plurality of leg portions 72 are downwardly extended from an outer edge portion of the ring. However, the shape of the base portion 71 is not necessarily limited to the ring shape.

Referring to Figs. 3 and 4, the legged spring 7A (the vibration proof spring 7) can move in upward and downward directions while keeping in contact with an inner wall surface CS1 which defines the valve chamber VS. In the example shown in Fig. 3, the inner wall surface CS1 is provided with a first surface 201 which substantially coincides with a side surface shape of a virtual cylinder, and a second surface 202 which coincides or substantially coincides with a side surface shape of a virtual truncated cone, and the second surface 202 corresponds to the deformation amount adjustment surface AS1.

A specific shape of the inner wall surface CS1 is optional without being necessarily limited to the example shown in Figs. 3 and 4. For example, in the example shown in Figs. 3 and 4, the second surface 202 (the deformation amount adjustment surface AS1) is provided below the first flow path 21 instead thereof, the second surface 202 may be provided above the first flow path 21.

In a case where the vibration proof spring 7 is the legged spring 7A, the leg portion 72 of the legged spring 7A moves while keeping in contact with the deformation amount adjustment surface AS1. More specifically, the end side protruding portion 72a of the leg portion 72 slides with respect to the deformation amount adjustment surface AS1.

In the example shown in Figs. 3 and 4, the legged spring 7A is arranged between the valve body support member 4 and the inner wall surface CS1, and the base portion 71 of the legged spring 7A is arranged between the valve body support member 4 and the urging member 5. Therefore, in the example shown in Figs. 3 and 4, the legged spring 7A moves in upward and downward directions and/or a lateral direction almost integrally with the valve body support member 4 and the valve body 3.

In the example shown in Figs. 3 and 4, the deformation amount adjustment surface AS1 is a surface on which a distance from the center axis AX of the actuating bar 6 becomes shorter as the surface AS1 goes towards an upward direction.

As a result, the leg portion 72 outwardly deforms greatly (in other words, in a direction toward the center axis AX of the actuating bar 6) in a state where the valve opening degree is very small (a state shown in Fig. 3). Further, since the amount of elastic deformation of the leg portion 72 is large, the legged spring 7A is center aligned by relatively strong force. In addition, since the valve body support member 4 and the valve body 3 move almost integrally with the legged spring 7A, the valve body support member 4 and the valve body 3 are also center aligned by the relatively strong force. Therefore, in the state where the valve opening degree is very small (the state shown in Fig. 3), the valve body 3 is center aligned by the relatively strong force. Due to this, the valve body 3 is resistant to lateral vibration, and is less likely to produce an abnormal noise from the expansion valve 1A.

On the other hand, in a state where the valve opening degree is comparatively large (the state shown in Fig. 4), the amount of elastic deformation of the leg portion 72 is relatively small. As a result, a sliding resistance between the legged spring 7A and the inner wall surface CS1 is small. Therefore, in a state where the valve opening degree is comparatively large (that is, in a steady operation state), the opening degree of the expansion valve 1A is smoothly adjusted by the actuating bar 6.

It is preferable that a length L1 of the second surface 202 in a direction along the longitudinal direction of the actuating bar 6 is larger than a distance between a lower moving limit of the valve body 3 and an upper moving limit of the valve body 3.

### (Second embodiment)

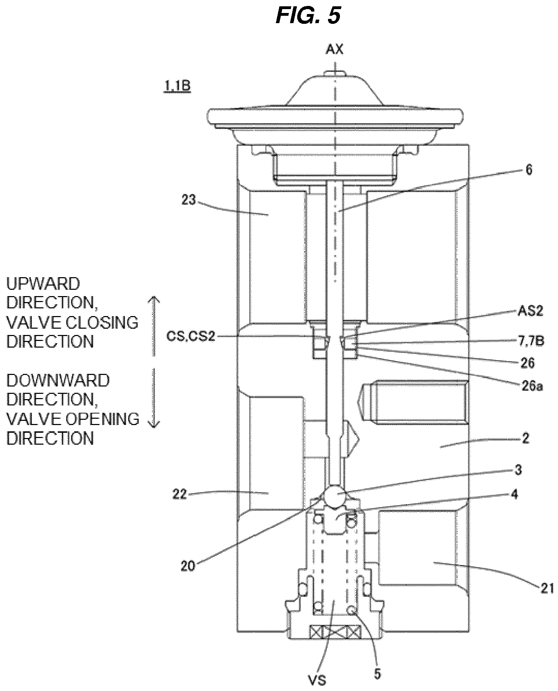

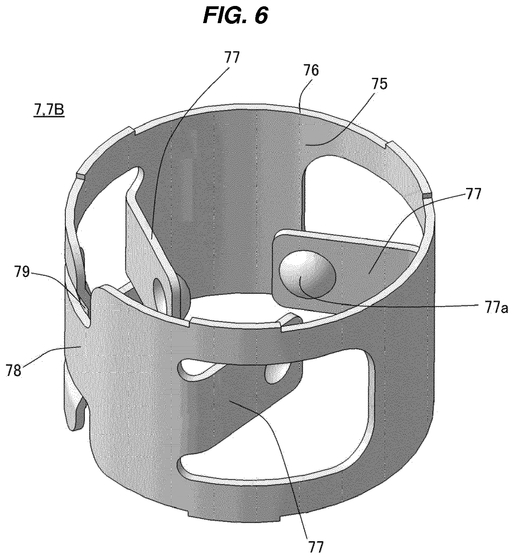

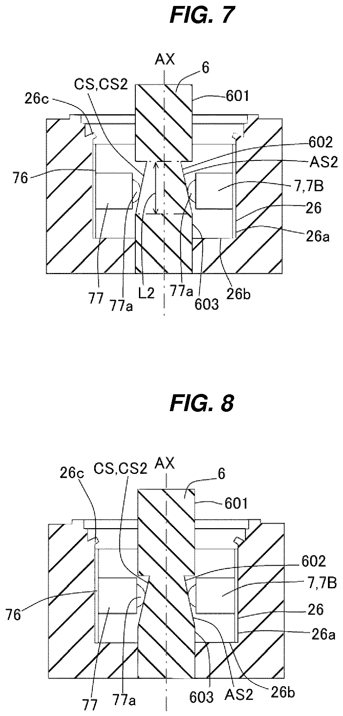

A description will be given of an expansion valve 1B according to a second embodiment with reference to Figs. 5 to 8. Fig. 5 is a view schematically showing an overall structure of the expansion valve 1B according to the second embodiment. Fig. 6 is a schematic perspective view schematically showing an example of the vibration proof spring 7. Fig. 7 is a view schematically showing a state of the vibration proof spring 7 in a case where the opening degree of the expansion valve 1B is very small. Fig. 8 is a view schematically showing a state of the vibration proof spring 7 in a case where the opening degree of the expansion valve 1B is comparatively large.

The expansion valve 1B according to the second embodiment is different from the expansion valve 1A according to the first embodiment in a point that the vibration proof spring 7 is arranged outside the valve chamber VS, and the vibration proof spring 7 is arranged so as to come into contact with the actuating bar 6. As a result, in the second embodiment, a description will be given by focusing on the vibration proof spring 7 and the actuating bar 6, and a redundant description of the structures other than the vibration proof spring 7 and the actuating bar will not be repeated.

In the second embodiment, the lower end of the actuating bar 6 is in contact with the valve body 3. Further, the actuating bar 6 presses the valve body 3 in an opening direction of the valve (that is, a downward direction) against urging force generated by the urging member 5. In a case where the actuating bar 6 moves in a downward direction, the valve body 3 separates from the valve seat 20 and the expansion valve 1B enters an open state.

The vibration proof spring 7 is a vibration proof member which suppresses a vibration of the valve body 3 and the actuating bar 6 (particularly, the actuating bar 6). In the example shown in Fig. 5, the vibration proof spring 7 is arranged within a concave portion 26 which is different from the valve chamber VS. Further, in the example shown in Fig. 5, the concave portion 26 is communicated with a return flow path 23 to be mentioned later, and the concave portion 26 is arranged below the return flow path 23.

The contact surface CS is a surface with which the vibration proof spring 7 slidably contacts. In other words, the contact surface CS can relatively move with respect to the vibration proof spring 7, and the contact surface CS is in contact with the vibration proof spring 7. In the example shown in Fig. 5, the contact surface CS is an outer peripheral surface CS of the actuating bar 6.

In the second embodiment, the amount of deformation of the vibration proof spring 7 increases as the valve body 3 goes towards a closing direction of the valve (that is, an upward direction). In other words, in the second embodiment, the amount of deformation of the vibration proof spring 7 when the opening degree of the expansion valve 1B is very small is greater than the amount of deformation of the vibration proof spring 7 when the opening degree of the expansion valve 1B is large. Further, since the amount of deformation of the vibration proof spring 7 when the opening degree of the expansion valve 1B is very small is large, the expansion valve 1 has high vibration proof performance in a case where the opening degree of the expansion valve 1B is very small. Further, since the amount of deformation of the vibration proof spring 7 when the opening degree of the expansion valve 1B is large is relatively small, the expansion valve 1 suppresses an increase in sliding resistance between the vibration proof spring 7 and the contact surface CS.

As mentioned above, in the expansion valve 1B according to the second embodiment, the vibration proof performance of the expansion valve 1B is improved while suppressing the increase in the sliding resistance between the vibration proof spring 7 and the contact surface CS. In other words, during steady operation (when the valve opening degree is relatively large), the increase in the sliding resistance is suppressed, which does not impair controllability of the expansion valve 1B as a consequence. On the other hand, when the opening degree is very small where the abnormal noise tends to be produced, the amount of deformation of the vibration proof spring 7 is increased, thereby more effectively suppressing the vibration of the valve body 3 and/or the actuating bar 6. As a result, the production of the abnormal noise from the expansion valve 1B can be suppressed.

In the second embodiment, the vibration proof spring 7 is arranged in the concave portion 26 which is different from the valve chamber VS, and the contact surface CS with which the vibration proof spring 7 slidingly contacts is an outer peripheral surface CS2 of the actuating bar 6.

In the example shown in Fig. 5, the vibration proof spring 7 is arranged between an inner wall surface 26a of the concave portion 26 and actuating rod 6.

Further, in the example shown in Fig. 5, the contact surface CS (the outer peripheral surface CS2) is a deformation amount adjustment surface AS2 on which a distance from a center axis AX of the actuating bar 6 becomes shorter as the surface AS2 goes towards a closing direction of the valve, that is, towards an upward direction. More specifically, the contact surface CS (the outer peripheral surface CS2) is a tapered surface on which the distance from the center axis AX of the actuating bar 6 becomes shorter as the surface CS goes towards the closing direction of the valve, that is, towards the upward direction.

### (Vibration proof spring 7)

A description will be given of an example of the vibration proof spring 7 according to the second embodiment with reference to Fig. 6. In the example shown in Fig. 6, the vibration proof spring 7 is a ring spring 7B which is provided with a plurality of elastic protruding portions 78. In the example shown in Fig. 6, while the number of the elastic protruding portions 77 is three, instead thereof, the number of the elastic protruding portions 77 may be equal to or more than four.

The ring spring 7B shown in Fig. 6 is provided with a ring portion 76, and three or more elastic protruding portions 77 which inwardly protrude from the ring portion 76 and come into contact with an outer peripheral surface CS2 of the actuating bar 6.

In the exampled shown in Fig. 6, the elastic protruding portions 77 are arranged at even intervals along a circumference direction of the ring portion 76. In the exampled shown in Fig. 6, each of the elastic protruding portions 77 is provided at its end with an end side protruding portion 77a which inwardly protrudes (in other words, toward the actuating bar 6). Further, as shown in Fig. 7, the end side protruding portion 77a comes into contact with the above deformation amount adjustment surface AS2. The end side protruding portion 77a may have a partly spherical shell shape. The partly spherical shell shape means a shape which coincides or substantially coincides with a part of the spherical shell. In a case where the end side protruding portion 77a has the partly spherical shell shape, a portion coming into contact with the deformation amount adjustment surface AS2 forms a smooth curved surface portion. As a result, the deformation amount adjustment surface AS2 is resistant to scratch. Further, since the partly spherical shell shape is a structurally high-strength shape, the shape of the end side protruding portion 77a is less likely to be deformed for a long time.

In a case where the ring spring 7B is made of metal, the end side protruding portion 77a can be formed by plastically deforming a plate 75 which is a material for the ring spring 7B by press working. In other words, the end side protruding portion 77a may be a plastic deformation portion.

In the example shown in Fig. 6, the ring portion 76 is formed by bending the plate 75 into an annular shape. More specifically, the ring portion 76 is formed by overlapping an end tongue piece 78 which is provided in one end of the plate 75, and a tongue piece receiving portion 79 which is provided in the other end of the plate 75. However, a method for forming the ring portion 76 is not necessarily limited to the above example.

Referring to Figs. 7 and 8, the actuating bar 6 can move in a downward direction while keeping in contact with the elastic protruding portion 77 of the ring spring 7B. In the example shown in Fig. 7, the outer peripheral surface CS2 of the actuating bar 6 is provided with a first surface 601 which coincides or substantially coincides with a side surface shape of a virtual cylinder, a third surface 603 which coincides or substantially coincides with the side surface shape of the virtual cylinder, and a second surface 602 which is arranged between the first surface 601 and the third surface 603. The second surface 602 is a surface which coincides or substantially coincides with a side surface shape of a virtual truncated cone, and the second surface 602 corresponds to the deformation amount adjustment surface AS2.

A specific shape of the outer peripheral surface CS2 is optional without being necessarily limited to the example shown in Figs. 7 and 8. For example, in the example shown in Figs. 7 and 8, while an intersection between the second surface 602 and the plane passing through the center axis AX of the actuating bar 6 is a straight line, instead thereof, the intersection may be a curved line.

In a case where the vibration proof spring 7 is the ring spring 7B, the deformation amount adjustment surface AS2 of the actuating bar 6 moves while keeping in contact with the elastic protruding portion 7 of the ring spring 7B. More specifically, the deformation amount adjustment surface AS2 of the actuating bar 6 slides with respect to the end side protruding portion 77a of the elastic protruding portion 77.

In the example shown in Figs. 7 and 8, the lower end of the ring spring 7B is in contact with a bottom surface 26b of the concave portion 26, and the upper end of the ring spring 7B is caulked and fixed by a caulking portion 26c of the concave portion 26.

In the example shown in Figs. 7 and 8, the deformation amount adjustment surface AS2 is a surface on which a distance from the center axis AX of the actuating bar 6 becomes shorter as the surface AS2 goes towards the upward direction.

As a result, the elastic protruding portion 77 outwardly deforms greatly (in other words, in a moving direction in which the elastic protruding portion 77 goes away from the center axis AX of the actuating bar 6) in a state where the valve opening degree is very small (a state shown in Fig. 7). Further, since the amount of elastic deformation of the elastic protruding portion 77 is large, the actuating bar 6 is center aligned by relatively strong force. In addition, since the lower end of the actuating bar 6 is in contact with the valve body, the valve body 3 is also center aligned by the relatively strong force. Therefore, in a state where the valve opening degree is very small (the state shown in Fig. 7), the valve body 3 is center aligned by the relatively strong force. Due to this, the valve body 3 is resistant to lateral vibration, and is less likely to produce an abnormal noise.

On the other hand, in a state where the valve opening degree is comparatively large (the state shown in Fig. 8), the amount of elastic deformation of the elastic protruding portion 77 is relatively small. As a result, a sliding resistance between the ring spring 7B and the outer peripheral surface CS2 of the actuating bar 6 is small. Therefore, in a state where the valve opening degree is comparatively large (that is, in a steady operation state), the opening degree of the expansion valve 1B is smoothly adjusted by the actuating bar 6.

It is preferable that a length L2 of the second surface 602 in a direction along the longitudinal direction of the actuating bar 6 is larger than a distance between a lower moving limit of the valve body 3 and an upper moving limit of the valve body 3.

### (Third embodiment)

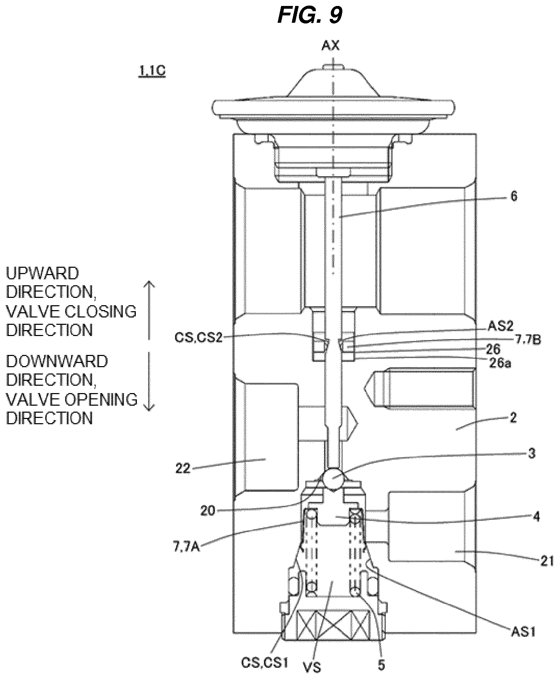

A description will be given of an expansion valve 1C according to a third embodiment with reference to Fig. 9. Fig. 9 is a view schematically shoring an overall structure of the expansion valve 1C according to the third embodiment.

The expansion valve 1C according to the third embodiment is provided with both the legged spring 7A which is described in the first embodiment, and the ring spring 7B which is described in the second embodiment. In other words, the third embodiment is a combination of the first embodiment and the second embodiment.

The expansion valve 1C according to the third embodiment exerts the same effects as those of the expansion valve 1A according to the first embodiment, and exerts the same effects as those of the expansion valve 1B according to the second embodiment.

Further, the expansion valve 1C according to the third embodiment is provided with the vibration proof spring 7 (the legged spring 7A) which is arranged within the valve chamber VS, and the vibration proof spring 7 (the ring spring 7B) which is arranged on the periphery of the actuating bar 6. For this reason, a vibration of the valve body 3 and the actuating bar 6 are effectively prevented by at least two vibration proof springs, thereby more effectively suppressing the production of the abnormal noise from the expansion valve 1C.

### (Application example of expansion valve 1)

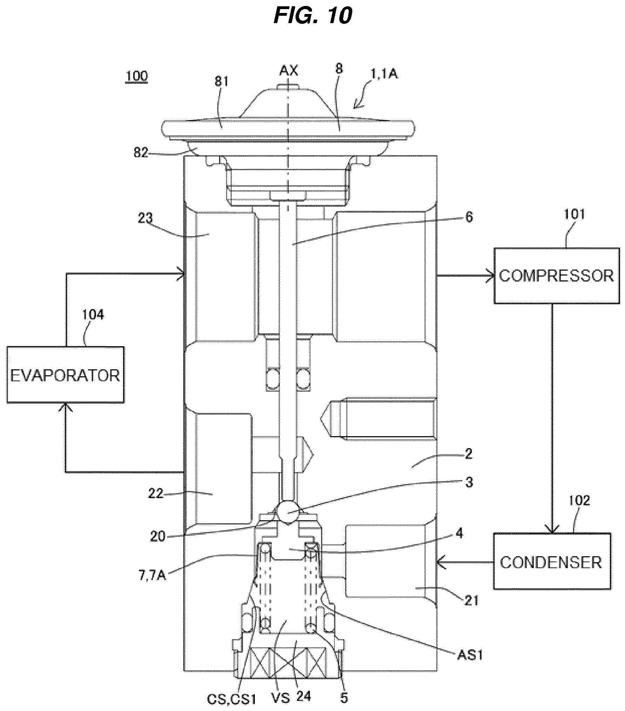

A description will be given of an example to which the expansion valve 1 is applied with reference to Fig. 10. Fig. 10 is a schematic cross sectional view schematically showing an example in which the expansion valve 1 according to the embodiment is applied to a refrigerant circulation system 100.

In the example shown in Fig. 10, the expansion valve 1 is fluid connected to a compressor 101, a condenser 102 and an evaporator 104.

Further, the expansion valve 1 is provided with a power element 8 which drives the actuating bar, and a return flow path 23, in addition to the valve main body 2, the valve body 3, the valve body support member 4, the biasing member 5, the actuating bar 6, the vibration proof spring 7, the first flow path 21, and the second flow path 22.

Referring to fig. 10, the refrigerant compressed by the compressor 101 is liquefied by the condenser 102, and is fed to the expansion valve 1. Further, the refrigerant adiabatically expanded by the expansion valve 1 is fed out to the evaporator 104, and is heat exchanged by the evaporator 104 with air flowing around the evaporator. The refrigerant going back from the evaporator 104 is returned back to the compressor 101 side through the expansion valve 1 (more specifically, the return flow path 23).

The high-pressure refrigerant is supplied to the expansion valve 1 from the condenser 102. More specifically, the high-pressure refrigerant from the condenser 102 is supplied to the valve chamber VS via the first flow path 21. The valve body 3 is arranged within the valve chamber VS opposed to the valve seat 20. Further, the valve body 3 is supported by the valve body support member 4, and the valve body support member 4 is upwardly urged by the urging member (for example, the coil spring). In other words, the valve body 3 is urged in the valve closing direction by the urging member 5. The urging member 5 is arranged between the valve body support member 4 and the urging member receiving member 24. In the example shown in Fig. 10, the urging member receiving member 24 is a plug which seals the valve chamber VS by being installed in the valve main body 2.

In a case where the valve body 3 is seated on the valve seat 20 (in other words, in a case where the expansion valve 1 is in a closed state), the first flow path 21 on the upstream side of the valve chamber VS and the second flow path 22 on the downstream side of the valve chamber VS are in a non-communicating state. On the other hand, in a case where the valve body 3 is separated from the valve seat 20 (in other words, in a case where the expansion valve 1 is in an open state), the refrigerant supplied to the valve chamber VS is discharged into the evaporator 104 through the second flow path 22. Switching between a closed state and an open state of the expansion valve 1 are made by the actuating bar 6 connected to the power element 8.

In the example shown in fig. 10, the power element 8 is arranged in an upper end portion of the expansion valve 1. The power element 8 is provided with an upper lid member 81, a receiving member 82 which has at its center an opening, and a diaphragm which is arranged between the upper lid member 81 and the receiving member 82. A first space which is surrounded by the upper lid member 81 and the diaphragm is filed with a working gas.

A lower surface of the diaphragm is connected to the actuating bar 6 via the diaphragm support member. As a result, when the working gas within the first space is liquefied, the actuating bar 6 moves in an upward direction, and when the liquefied working gas is vaporized, the actuating bar 6 moves in a downward direction. In this way, the expansion valve 1 is switched between the open state and the closed state.

A second space between the diaphragm and the receiving member 82 is communicated with the return flow path 23. Therefore, a phase (a gas phase or a liquid phase) of the actuation gas within the first space is changed in response to a temperature and a pressure of the refrigerant flowing through the return flow 23, thereby driving the actuating bar 6. In other words, in the expansion valve 1 shown in fig. 10, the amount of the refrigerant supplied from the expansion valve 1 toward the evaporator 104 is automatically adjusted in response to the temperature and the pressure of the refrigerant returning back to the expansion valve 1 from the evaporator 104.

In the example shown in Fig. 10, the description is given of the example in which the expansion valve 1 used in the above refrigerant circulation system 100 is the expansion valve 1A according to the first embodiment. Alternatively, the expansion valve used in the refrigerant circulation system 100 may be the expansion valve 1B according to the second embodiment, or may be the expansion valve 1C according to the third embodiment.

The present invention is not necessarily limited to the above embodiments. A modification is possible to freely combine the above embodiments, and to modify any given constituent elements in each of the embodiments, within the scope of the present invention. Further, addition and omission of any given constituent elements are possible in each of the embodiments.

For example, in the above embodiments, the description is given of the example in which the vibration proof spring 7 is made of the metal. Alternatively, the vibration proof spring 7 may be made of a resin.

### REFERENCE SIGNS LIST

1, 1A, 1B, 1C: expansion valve
2: valve main body
3: valve body
4: valve body support member
5: urging member
6: actuating bar
7: vibration proof spring
7A: legged spring
7B: ring spring
8: power element
20: valve seat
21: first flow path
22: second flow path
23: return flow path
24: urging member receiving member
26: concave portion
26a: inner wall surface
26b: bottom surface
26c: caulking portion
71: base portion
72: leg portion
72a: end side protruding portion
75: plate
76: ring portion
77: elastic protruding portion
77a: end side protruding portion
78: end portion tongue piece
79: tongue piece receiving portion
81: upper lid member
82: receiving member
100: refrigerant circulation system
101: compressor
102: condenser
104: evaporator
201: first surface
202: second surface
601: first surface
602: second surface
603: third surface
AS1: deformation amount adjustment surface
AS2: deformation amount adjustment surface
CS: contact surface
CS1 : inner wall surface
CS2: outer peripheral surface
VS: valve chamber

## Claims

1. An expansion valve comprising:
a valve main body provided with a valve chamber;
a valve body arranged within the valve chamber;
a valve body support member supporting the valve body;
an urging member urging the valve body toward a valve seat;
an actuating bar being in contact with the valve body and pressing the valve body in an opening direction of the valve against urging force generated by the urging member;
a vibration proof spring suppressing a vibration of the valve body or the actuating bar; and
a contact surface with which the vibration proof spring slidably contacts,
wherein the contact surface has a shape by which the amount of deformation of the vibration proof spring becomes greater as the valve body goes toward a closing direction of the valve.

2. The expansion valve according to claim 1, wherein the vibration proof spring comprises a legged spring, and
wherein the legged spring comprises:
a base portion; and
a plurality of leg portions downwardly extending from the base portion.

3. The expansion valve according to claim 2, wherein the vibration proof spring further comprises a ring spring, and
wherein the ring spring comprises:
a ring portion; and
an elastic protruding portion inwardly protruding from the ring portion and comes into contact with an outer peripheral surface of the actuating bar.

4. The expansion valve according to any one of claims 1 to 3, wherein the vibration proof spring is arranged within the valve chamber, and
wherein the contact surface is an inner wall surface defining the valve chamber.

5. The expansion valve according to any one of claims 1 to 4, wherein the contact surface has a deformation amount adjustment surface to which a distance from a center axis of the actuating bar becomes shorter as the surface goes towards the valve closing direction.

6. The expansion valve according to any one of claims 1 to 5, further comprising a power element defining the actuating bar.
